(19) Europäisches Patentamt
European Patent Office
Office européen des brevets

(11) **EP 2 187 337 A1**

(12) **EUROPEAN PATENT APPLICATION**

(43) Date of publication:
**19.05.2010 Bulletin 2010/20**

(51) Int Cl.:
**G06K 9/00** (2006.01)     **H04N 7/26** (2006.01)
**H04N 7/50** (2006.01)     **H04N 5/14** (2006.01)

(21) Application number: **08019760.1**

(22) Date of filing: **12.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Sony Corporation
Tokyo 108-0075 (JP)**

(72) Inventors:
• **Merlos Fernandez, Francisco
70327 Stuttgart (DE)**

• **Zimmermann, Klaus
70327 Stuttgart (DE)**
• **Veltmann, Markus
70327 Stuttgart (DE)**

(74) Representative: **Müller - Hoffmann & Partner
Patentanwälte
Innere Wiener Strasse 17
81667 München (DE)**

(54) **Extracting a moving mean luminance variance from a sequence of video frames**

(57)     A method and a device for extracting a mean luminance value from a inter-coded frame is proposed, wherein the inter-coded frame is a part of a sequence of video frames, the method comprising: approximating DC coefficients for macro-blocks of the inter-coded frame based on DC coefficients of Intra-coded macro-blocks surrounding reference blocks in a reference frame of the sequence, the reference blocks being pointed to by motion vectors of the macro-blocks of the inter-coded frame; and calculating the mean luminance value based on the approximated DC coefficients; and calculating a moving mean luminance variance of a sequence of video frames.

S100

Approximating DC coefficients for inter-coded frame's macro-blocks based on DC coefficients of intra-coded macro-blocks of the sequence

S102

Calculating mean luminance value based on approximated DC coefficients

FIG 1

EP 2 187 337 A1

**Description**

An embodiment of the invention relates to a method and device for extracting a mean luminance variance from a sequence of video frames.

BACKGROUND

Frame mean luminance is an important video characteristic which represents the overall amount of luminance contained in a frame.

Nowadays, most of video data is transmitted in a compressed form, e.g. in MPEG-2 (Motion Pictures Expert Group) form. In MPEG-2, Motion Compensation is performed in the spatial domain, that is, after the decoding of the required reference frames. To be able to Motion Compensate any frame, first, the reference frames on which the frame to reconstruct is based have to be decoded and buffered.

Throughout this specification frames might also be referred to as pictures or images.

Then, using the motion vectors for the current frame, the required pixel information is taken from the corresponding decoded reference frames and placed in the current frame. Additionally, for predicted frames with differential error coding, the transmitted error is decoded and added to the motion estimation.

In the compressed domain, however, this motion compensation process cannot be applied for one fundamental reason: while in the spatial domain all the pixels corresponding to the reference frames are available (since they have been previously decoded), in the compressed domain only the DCT coefficients of each previously delimited macro-block may be used. In most cases, the reference region pointed to by the motion vectors does not match with a unique macro-block, but overlaps several macro-blocks.

There are several MPEG standards for digital video: MPEG-1. MPEG-2, MPEG-4. MPEG- 2 is intended for high data rate video application ranging from video conferencing to High Definition TV.

Like any compression algorithm, MPEG-2 tries to reduce the redundancy in the video data.

In general, uncompressed video data consists of a sequence of consecutive frames taken at different instants in time. In MPEG-2, each frame is hierarchically divided in slices, macro-blocks (MBs), blocks and pixels (pels). The pels (or pixels) are the smallest image elements, and they represent individual sample values of luminance and crominance (equivalent to red, green and blue color intensities in RGB standards). A block is a set of 8 x 8 pels, a macro-block consists of 4 blocks or 16 x 16 pels, and a slice is an horizontal array of 1 x n macro-blocks, n being the number of macro-blocks from 1 to the maximum number of macro-blocks horizontally.

Like JPEG image compression algorithm, MPEG-2 employs a block-based two-dimensional Discrete Cosine Transform (DCT). A block of 8 x 8 pels is transformed into a 8 x 8 block of DCT coefficients.

In pel blocks with uniform luminance and color, like a piece of the sky, a few DCT coefficients will concentrate all the energy, while the rest will be zero or almost zero. Thus, very frequently, for each 64 frame block only a few DCT coefficients have to be transmitted, reducing the amount of information tremendously. Thus, for a monochrome block, only the top leftmost coefficient (also called DC coefficient) would be non zero, while for a high textured or noisy block, the bottom rightmost part would contain some non-zero values. After quantization, the resulting non-zero coefficients are scanned in a zigzag way starting from the upper rightmost coefficient, and are encoded using a Variable Length Coding (VLC).

Temporal redundancy exists due to the similarity between adjacent frames. In MPEG-2 there are 3 main types of frames: 1-frames, P-frames and B-frames. In I-frames all macro-blocks are intra-coded, that means, the quantized DCT coefficients of all macro-blocks are transmitted. In P-frames, macro-blocks can be either intra-coded, forward predicted, or skipped, depending on the degree of change of the macro-block with respect to the previous frame. Similarly, B-frames macro-blocks can be intra-coded, skipped, forward predicted, backward predicted or bi-directionally predicted.

Each forward predicted macro-block is derived from the previous reference frame's (I or P-frame) macro-block pointed to by a motion vector (MV), and an estimated error. That is, instead of transmitting the DCT coefficient of the macro-block, a motion vector pointing to the previous position of the macro-block is provided together with the estimated error of this prediction. This way the DCT coefficient information of previous reference frames is used to derive the current macro-block information. In the same fashion, backward predicted macro-blocks consist of a motion vector pointing to the position of the macro-block in the next reference frame.

Bi-directionally predicted macro-blocks contain two motion vectors, one from the previous reference frame, and one of the next reference frame.

The motion vectors are calculated during the compression process by comparing each macro-block with some or all other macro-blocks in the previous and/or next reference frame. There are several ways how this motion vectors can be obtained.

The most popular is the Inter-frame Hybrid Coding. With this method, the motion vectors are obtained in the Motion Estimator in the spatial domain, that is, with the uncompressed video information. Then, the motion vectors will be differentially encoded: each transmitted motion vector represents the difference with respect to the previously transmitted motion vector. Finally, the Motion Compensated Predictor obtains the difference between the reconstruction based on motion vector and the original frame. For this purpose the encoded DCT coefficients have to be inverse quantized and inverse transformed. The differential error is VLC coded and sent together with the motion vectors and a flag indicating whether there is such error information or not. MPEG-2 can deal with both Progressive and Interlaced video.

Pictures or frames are organized in Groups of Pictures (GOP). A GOP is a combination of one I frame and zero or more P and B-frames which is usually (but not necessarily) periodically repeated during the whole video sequence. A GOP contains at least and just one I-frame, which is located at the beginning of the GOP.

In compressed video formats as e.g. in MPEG-2 it is difficult to extract the mean luminance, since only in 1-frames, but not in P- and B-frames the DCT-coefficients are completely available.

Thus, there is a need for an improved method and device for extracting a mean luminance variance in the compressed domain.

This object is solved by a method and device according to claims 1, 8 and 13.

Further details of the invention will become apparent from a consideration of the drawings and ensuing description.

BRIEF DESCRIPTION OF THE SEVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.

Fig. 1 shows a schematic flowchart of a method according to an embodiment of the invention,

Fig. 2 shows schematically a device according to a further embodiment of the invention,

Fig. 3 shows a schematic flowchart of a method according to a further embodiment of the invention,

Fig. 4 shows schematically a device according to a further embodiment of the invention,

Fig. 5 shows schematically an approximation of DC coefficients according to a further embodiment of the invention,

Fig. 6 shows schematically an approximation of DC coefficients according to a further embodiment of the invention,

Fig. 7 shows schematically a result of a mean luminance value extraction according to a further embodiment of the invention,

Fig. 8a shows schematically a result of a mean luminance value extraction without preprocessing according to a further embodiment of the invention,

Fig. 8b shows schematically a result of a mean luminance value extraction with preprocessing according to a further embodiment of the invention,

Fig. 9a shows schematically a result of a mean luminance value extraction without preprocessing according to a further embodiment of the invention,

Fig. 9b shows schematically a result of a mean luminance value extraction with preprocessing according to a further embodiment of the invention.

DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

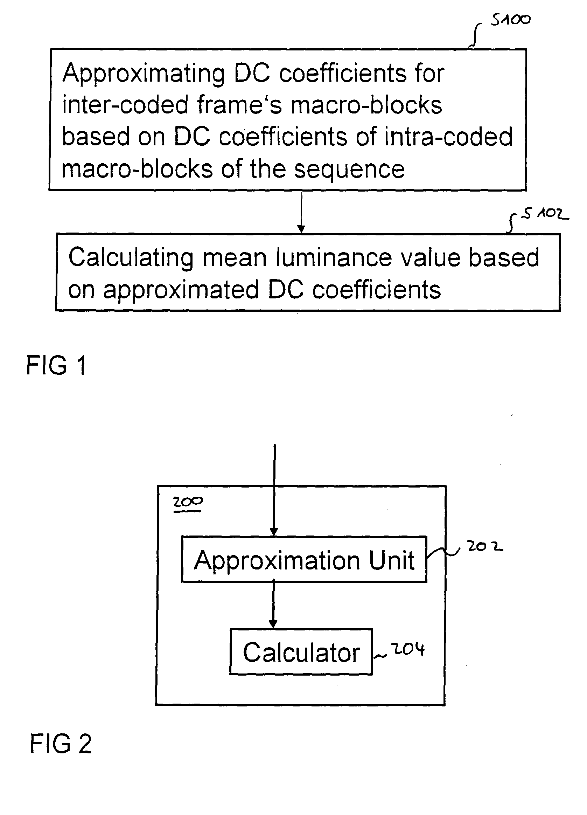

In Fig. 1 a flowchart of a method for extracting a mean luminance value from an inter-coded frame is depicted. In S100 DC coefficients are approximated for the inter-coded frame's macro-blocks based on DC coefficients of intra-coded frame's macro-blocks of a sequence of video frames. DC coefficients for macro-blocks of the inter-coded frame are approximated based on DC coefficients of intra-coded macro-blocks surrounding reference blocks in a reference frame of the sequence, the reference blocks being pointed to by motion vectors of the macro-blocks of the inter-coded frame.

The DC coefficient is the lowest frequency coefficient. The process to obtain the approximation of the rest of the DCT coefficients is, however, analogous. Moreover, the algorithm will work at a subblock level. Each macro-block consists of 4 such luminance subblocks of 8 x 8 DCT coefficients. The first coefficient is the lowest frequency component or DC coefficient. Each subblock will have assigned the same macro-block type as the macro-block it belongs to. Each subblock will have assigned the motion vector of their corresponding macro-block except in the case of field macro-block. The motion vectors consist of a pair (x, y) representing the horizontal and vertical shift with respect to the current subblock position.

The overall process for DC coefficient approximation can be divided in two parts. First, based on the frame type, macro-block type and motion vectors, the reference region and the up to 4 surrounding subblocks have to be located. Then, the currently predicted DC coefficient will be approximated based on one or several of these surrounding subblocks. This process is repeated for each macro-block to be predicted.

For each subblock, the location of the corresponding reference subblocks is determined as follows.

If the decoded frame is of P type, the following cases apply depending on the macro-block type:

- Forward predicted: the motion vectors point to the reference region in the previous reference frame

- Skipped: the motion vectors are zero and point to the reference region in the previous reference frame

If the decoded frame is of B type, the following cases apply depending on the macro-block type:

- Forward predicted: the motion vectors point to the reference region in the previous reference frame

- Backward predicted: the motion vectors point to the reference region in the next reference frame

- Bi-directionally predicted: two pairs of motion vectors are transmitted, one pointing to the previous reference frame, and one pointing to the next reference frame reference region

- Skipped: the motion vectors and macro-block type are identical to the previously computed non-skipped subblock. After motion vector and macro-block type information is copied from the corresponding previous non-skipped subblock, one of the previous cases shall apply.

This data approximation can be also applied for other compressed domain video features which depend on changes in consecutive frames like luminance histogram difference, shot boundary detection, edge change ratio, etc. It just provides the missing information for P and B-frames to be able to obtain features also from them.

In S102 the mean luminance value is calculated based on the approximated DC coefficients of S 100.

In Fig. 2 a device 200 for extracting the mean luminance value from an inter-coded frame is depicted, wherein the inter-coded frame is a part of a sequence of video frames. The device 200 includes an approximation unit 202 configured to approximate DC coefficients for the inter-coded frame's macro-blocks based on DC coefficients of intra-coded frame's macro-blocks of the sequence. The device further includes a calculator configured to calculate the mean luminance value based on the approximated DC coefficients.

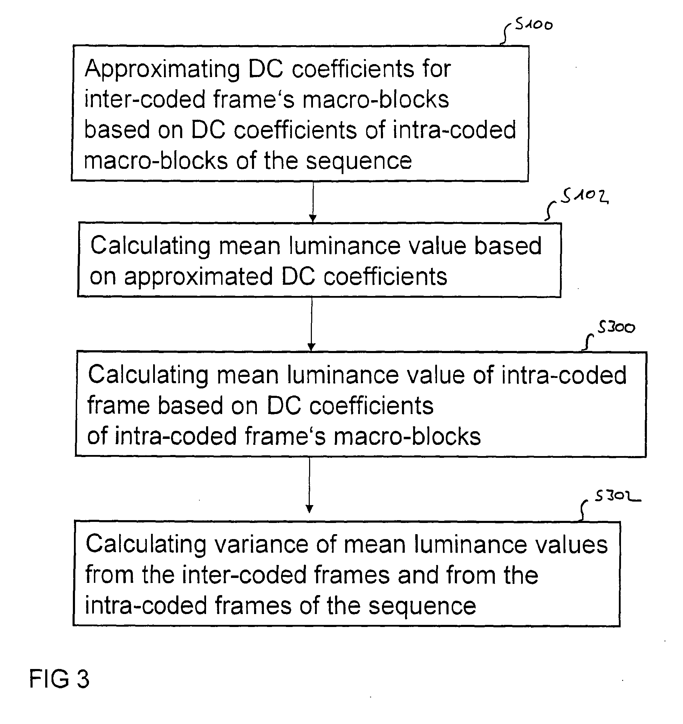

In Fig. 3 a flowchart of a further method is depicted. In S300 mean luminance values of a intra-coded frame are calculated based on DC coefficients of the intra-coded frame's macro-blocks and in S302 a variance of mean luminance values is calculated from the inter-coded frames and from the intra-coded frames of the sequence.

The proposed method directly extracts the mean luminance variance from the compressed video data, and therefore, the method does not require a full video decoding. Moreover, it makes use of the DC coefficients obtained at the encoder side. The DC coefficient is a scaled version of the average of a 8x8 luminance pixel block. Thus, the mean luminance of a frame can be obtained much faster than with conventional methods.

Another advantage with respect to alternative video luminance features is that the method does provide contextual information about all the frames in a temporally sliding window. It is also possible to use a centered temporally sliding window, i.e. a window around a current frame that takes into account the same number of frames in the future and in the past. For many applications the variation of the luminance over a certain period of time is much more important than the value of the luminance for an individual frame.

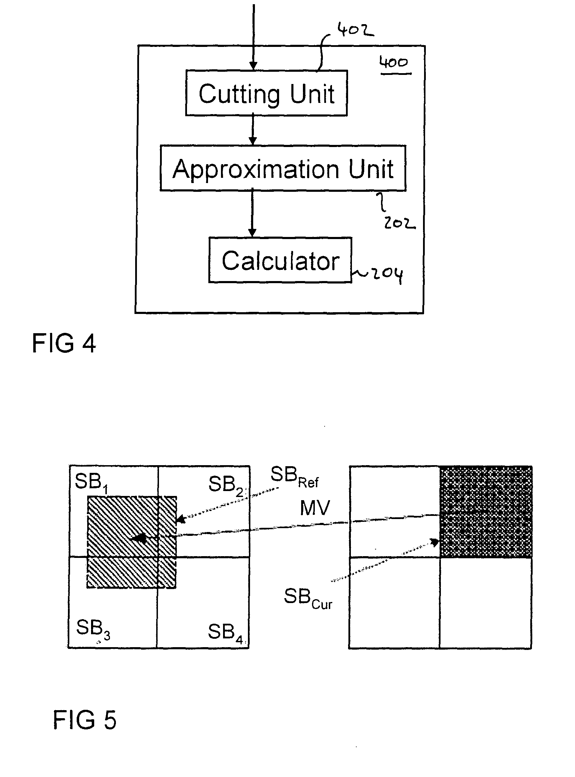

In Fig. 4 a further schematic device 400 is depicted which comprises a cutting unit 402 configured to cut a border of the frame before approximating the DC coefficients in the approximation unit 202. When cutting the border two positive effects result:

1) Possible border effects are avoided. It has been observed that many files or frames have residual stripes in the outermost part of the frame which do not correspond to the original frame. Because of their small size these stripes do not affect greatly the mean luminance, but they affect greatly other features like monochrome frames detection.
2) The mean luminance value is independent from a letterbox presence. If letterboxes are not cut, video sequences with letterboxes will present a lower mean luminance. This increases the correlation between this feature and the letterbox detection feature. In order to provide a good performance features should be highly correlated with the class (in this case commercial segments) and uncorrelated between them.

The DC coefficients of the inter-coded frame's macro-block might be calculated by a "closest subblock selection" method explained more in detail with reference to Fig. 5. For instance, it is possible that a block belonging to a reference frame of the inter-coded frame is determined. The block has the largest overlap with a reference block of the macro-block. Afterwards the DC coefficient of the macro- block is determined based on a DC coefficient of the block or the reference frame.

Based on the current subblock ($SB_{Cur}$) position and the motion vectors (MV), the closest subblock to the reference region is selected and its DC coefficient is copied in $SB_{Cur}$. This method has the advantage of being fast, since little computations need to be done.

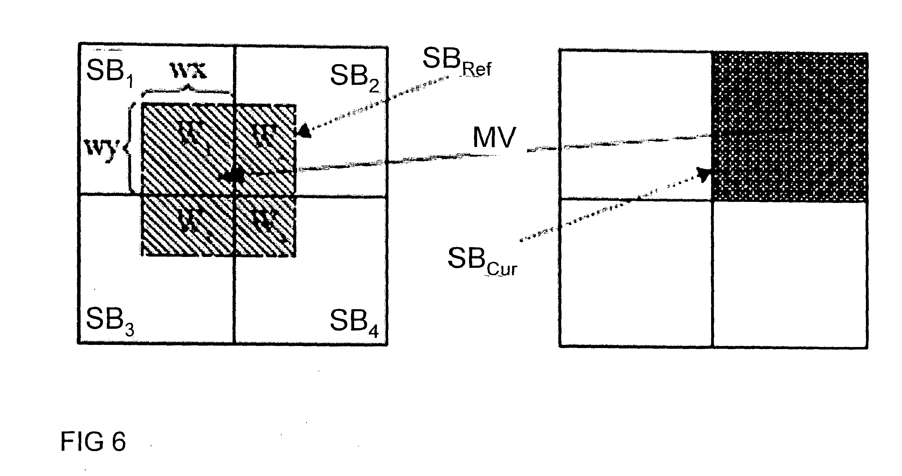

In Fig. 6 a further method of approximating a DC coefficient is depicted, which is also referred to as "weighted sum".

With this "weighted sum"-method the DC coefficient of the current subblock ($SB_{Cur}$) is approximated by the weighted sum of the DC coefficients of the up to 4 subblocks surrounding the original reference region:

$$DC(SB_{Cur}) = \sum_{i=1}^{4} w_i \cdot DC(SB_i) + DC_{Err} \qquad (1)$$

Where the weights $w_i$ represent the fraction of each subblock's $SB_i$ area that overlaps the reference subblock region and $DC_{Err}$ represents the transmitted coded error DC coefficient. In general this method represents a good approximation in terms of mean squared error (MSE). However, this does not necessarily mean that it is better for the later video features extraction. This is especially true for the monochrome frame detection, since the error introduced by considering all macro-blocks, even if they are very separated to the reference region, may result in a different DC value for the reconstructed macro-block than the expected one. Moreover this approximation method has, however, the disadvantage of requiring a high computational power. To approximate each subblock, first the corresponding overlapping areas have to be calculated, and then the weighted sum has to be built. In comparison, the closest subblock selection method just needs to perform a round division per Motion vector component to find the selected subblock and then the DC coefficient is just copied.

In the spatial domain, the mean luminance of a frame is the average of the luminance intensity of each pixel. In the compressed domain, an equivalent calculation can be obtained from the luminance subblocks' DCT coefficients. Mean luminance gives an estimation of the frame's intensity perceived by the audience. Because of the huge variety of video content in TV broadcast, there is not a direct relation between the luminance intensity and the kind of content displayed. However, in general, documentaries, films and series present lower luminance intensity than news, shows or commercials. Inside commercial blocks one may find sketches with high luminance, trying to catch the viewers' attention, but also sketches with a very low luminance profile, showing brand names or symbols upon a dark background.

As it will be proved, the mean luminance in the compressed domain can be calculated from the lowest frequency DCT coefficients. In the spatial domain the mean luminance is calculated as follows. Let p(x,y), x belonging to $\{0,...,N_x-1\}$ and y belonging to $\{0,...,N_y-1\}$, be one of the $(N_x \times N_y)$ luminance pixel values of frame k in the spatial domain, then, the mean luminance $\overline{\lambda}_{spatial}$ is

$$\bar{\lambda}_{spatial}(k) = \frac{1}{N_x N_y} \sum_{x=0}^{N_x-1} \sum_{y=0}^{N_y-1} p(x,y)$$

$$(2)$$

The DCT transform F(u,v) is defined for e.g. a subblock with N=8x8 pixels, as

$$F(u,v) = \frac{2K(u)K(v)}{8} \sum_{x=0}^{7} \sum_{y=0}^{7} f(x,y) \cos\frac{\pi u(2x+1)}{16} \cos\frac{\pi v(2y+1)}{16}$$

$$(3)$$

Where u, v, x and y belonging to {0, 1, ...N - 1}, (x, y) are the spatial coordinates in the sample domain, (u, v) are coordinates in the transform domain and

$$K(w) = \begin{cases} \frac{1}{\sqrt{2}} & \text{if } w = 0 \\ 1 & \text{otherwise} \end{cases}$$

$$(4)$$

From this definition it can be derived that the lowest frequency DCT coefficient or DC coefficient $c_{u,v}(0,0)$, u belonging to {0.....$N_x$/8 -1} and v belonging to {0,..., $N_y$/8 -1}, of a certain subblock $f_{u,v}(i,j)$, i belonging to {0,...,7} and j belonging to {0,...,7}, is

$$c_{u,v}(0,0) = \frac{1}{8} \sum_{i=0}^{7} \sum_{j=0}^{7} f_{u,v}(i,j)$$

$$(5)$$

The average of all DC coefficients for frame k is

$$\bar{\lambda}_{comp}(k) = \frac{1}{\frac{N_x}{8}\frac{N_y}{8}} \sum_{u=0}^{\frac{N_x}{8}-1} \sum_{v=0}^{\frac{N_y}{8}-1} c_{u,v}(0,0)$$

$$(6)$$

Combining both equations results in

$$\bar{\lambda}_{comp}(k) = \frac{1}{\frac{N_x}{8}\frac{N_y}{8}} \sum_{u=0}^{\frac{N_x}{8}-1} \sum_{v=0}^{\frac{N_y}{8}-1} \left( \frac{1}{8} \sum_{i=0}^{7} \sum_{j=0}^{7} f_{u,v}(i,j) \right) =$$

$$= \frac{8}{N_x N_y} \sum_{x=0}^{N_x-1} \sum_{y=0}^{N_y-1} p(x,y) = 8\bar{\lambda}_{spatial}(k)$$

$$(7)$$

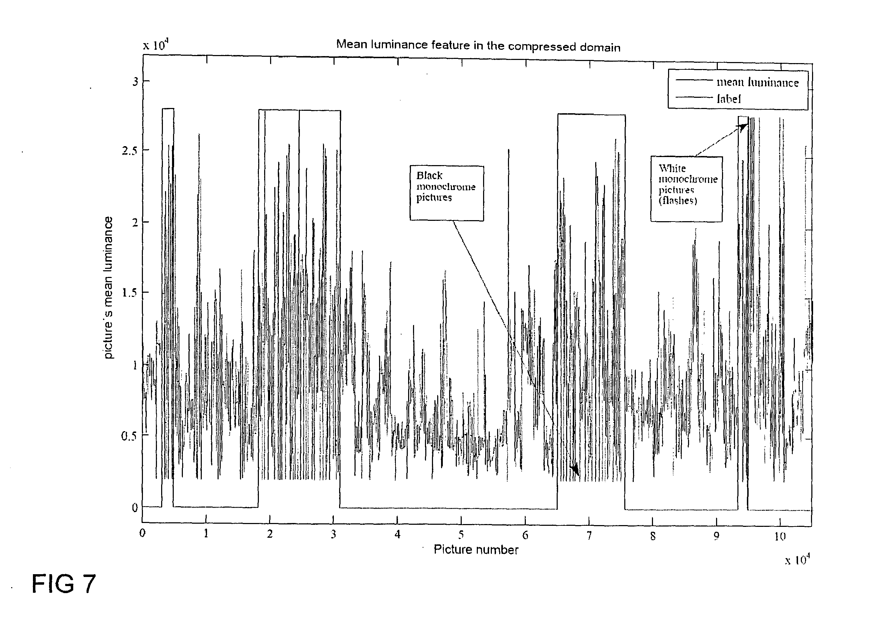

As derived from this equation (7), the average of the DC coefficients of a certain frame is nothing but the scaled version of the mean luminance in the spatial domain. The DC coefficients for I-frames are directly obtained from the bitstream while for P and B-frames are obtained from the closest subblock selection approximation method. Figure 7 shows one example of the mean luminance feature in the compressed domain. Isolated black frames can be easily identified for their very low mean luminance. Flashes result in very high luminance frames.

For some digital video processing applications, the variation of the luminance of the frames over a certain period of time is a good indicator to what is happening in the video. A video surveillance camera can differentiate between a video with constant luminance (no activity) and a video where somebody is crossing in front of the camera (which will produce a variance in the frame mean luminance). For the commercial detection task, for example, it is known that during commercial blocks the background and the content changes completely from one spot to the next, and so does the mean luminance. This is something that does not happen so often in usual programs, where the backgrounds and content remains similar during longer periods of time.

The raw mean luminance gives, for every frame, the mean value of the luminance DC coefficients. A preprocessing step might be performed for the purpose of aggregating contextual information for this feature in order to provide a feature with a higher level of abstraction (mid-level features), which can better help the supervised learning algorithms in their task. Instead of considering each frame individually, the preprocessed feature considers the characteristics of the surrounding frames in a certain interval of time.

Two different methods have been examined for this purpose.

1) Average of the mean luminance in a sliding window

As it is known that commercial frames do not come alone, but in sequences of frames, the average luminance of all the frames in a certain window may give more information than considering the luminance of a frame alone. The average is done over a sliding window centred at currently processed feature position, except in the borders (beginning and end of the file) where the window gradually decreases the side closest to the border. Let $w_{size}$ be the size of the window (odd number), $\lambda_{comp}(k)$ the mean luminance of frame k, and M the total number of frames for that video file. Then the mean luminance average is for an 8x8 pixel block size:

$$MLA(w_{size}, k) = \begin{cases} \frac{1}{k+w_h} \sum_{i=1}^{k+w_h} \bar{\lambda}_{comp}(k) & \text{if } k < w_h \\ \frac{1}{2w_h+1} \sum_{i=k-w_h}^{k+w_h} \bar{\lambda}_{comp}(k) & \text{if } w_h < k < M - w_h \\ \frac{1}{M-k+w_h} \sum_{i=k-w_h}^{M} \bar{\lambda}_{comp}(k) & \text{if } k > M - w_h \end{cases}$$

$$(8)$$

where,

$$w_h = \frac{w_{size} - 1}{2}$$

$$(9)$$

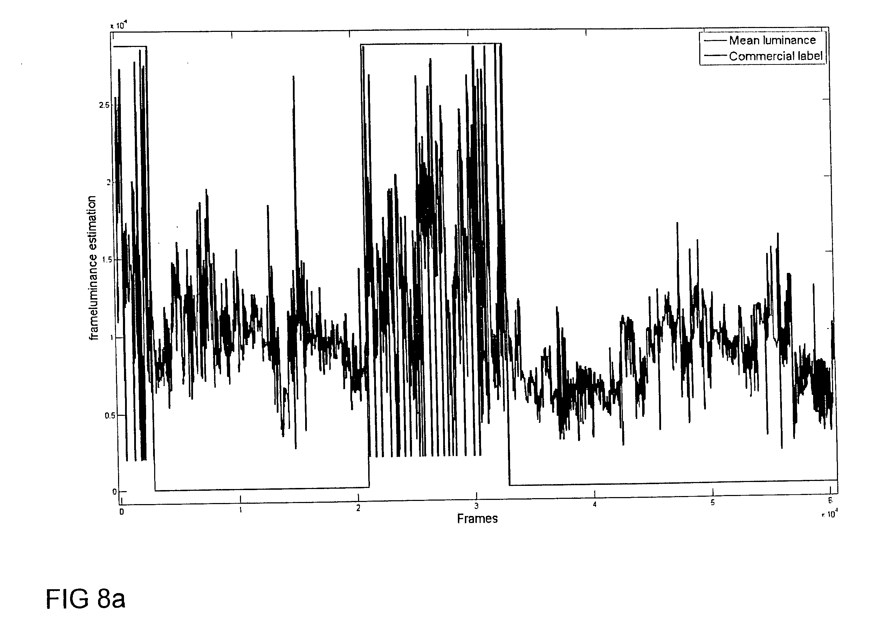

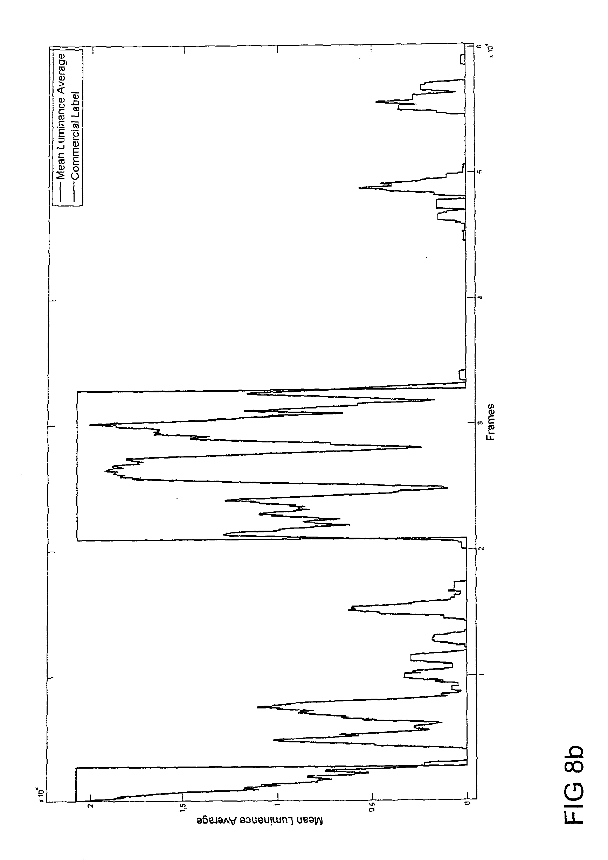

Figure 8a shows the averaged mean luminance as compared to the raw mean luminance feature in Figure 8b.

2) Variance of the mean luminance in a sliding window

The variance of the mean luminance (MLV) represents the variations of the mean luminance feature in a certain centred sliding window. Let M, $w_{size}$, $w_h$ and $\lambda_{Spatial}(k)$ represent the frame's mean luminance, then for an 8x8 pixel block size:

$$MLV(w_{size}, k) = \begin{cases} \frac{1}{k+w_h} \sum\limits_{i=1}^{k+w_h} \left( \bar{\lambda}_{comp}(k) - MLA(w_{size}, k) \right)^2 & \text{if } k < w_h \\ \frac{1}{2w_h+1} \sum\limits_{i=k-w_h}^{k+w_h} \left( \bar{\lambda}_{comp}(k) - MLA(w_{size}, k) \right)^2 & \text{if } w_h < k < M - w_h \\ \frac{1}{M-k+w_h} \sum\limits_{i=k-w_h}^{M} \left( \bar{\lambda}_{comp}(k) - MLA(w_{size}, k) \right)^2 & \text{if } k > M - w_h \end{cases}$$

(10)

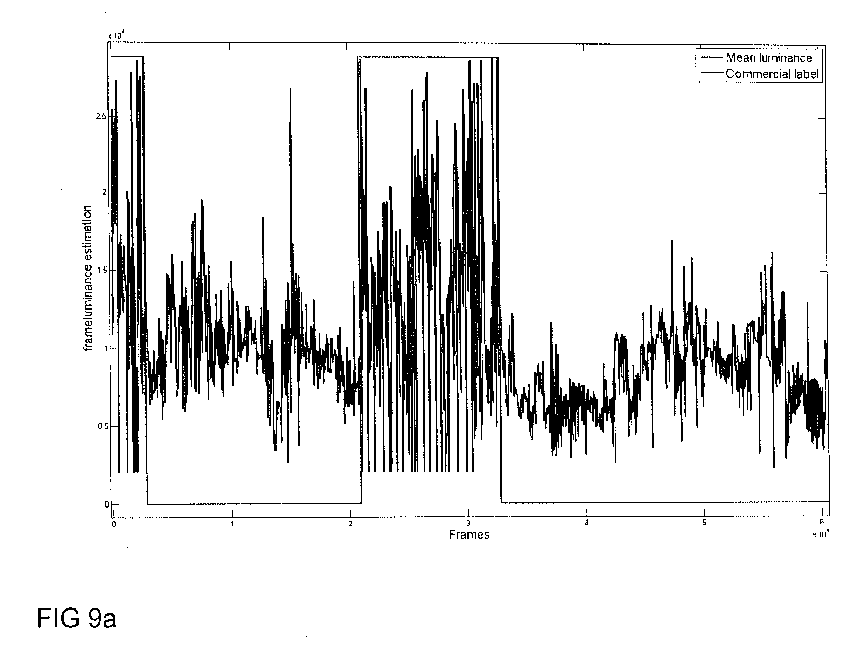

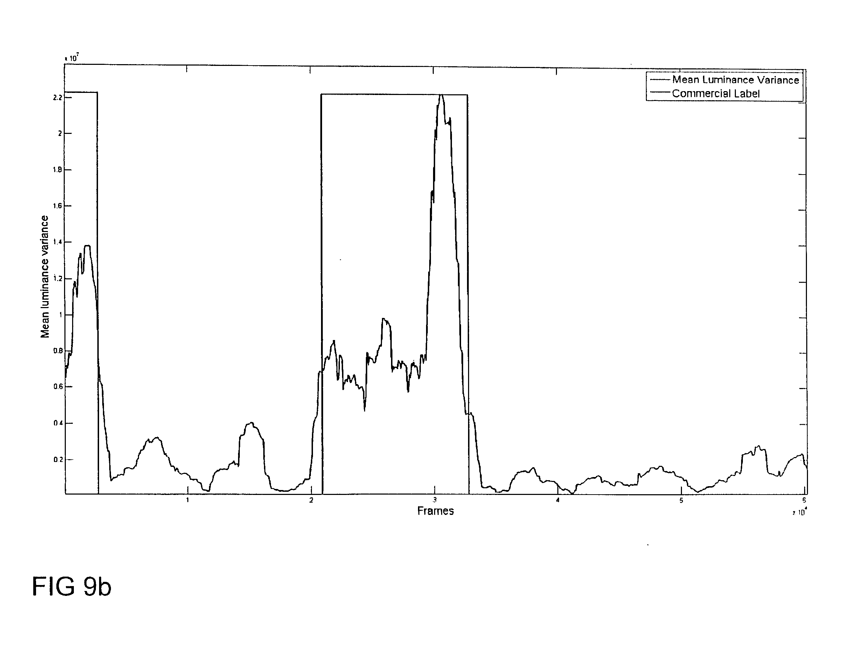

Figure 9 shows the comparison between the raw mean luminance feature in Figure 9a and the preprocessed mean luminance variance in Fig. 9b.

Frame mean luminance is an important video characteristic which represents the overall amount of luminance contained in a frame. However, for many applications, the particular mean luminance of a frame is not as important as the variation of this luminance over a certain period of time. The proposed MLV represents the variation of a video characteristic (frame mean luminance) in a certain interval of time. The MLV feature is obtained directly from the information contained in the compressed digital video bitstream. The method has been applied for MPEG2 compressed video, but it could be applied to any other digital video compression standard which makes use of frequency domain transformations (like the discrete cosine transform or the wavelet transform).

The calculation of the frame mean luminance is done with the lowest luminance DC coefficient of each subblock inside a frame. This lowest luminance coefficient, or luminance DC coefficient, represents the (scaled) average of all the luminance pixels inside the corresponding subblock. However, the DC coefficients are only completely available for I frames. In the compressed video bitstream there are also B and P-frames, interlaced in a repetitive structure called Group of Pictures (GOP). This group of frames consists of at least one I-frame and a variable number of interlaced P and B-frames. P and B-frames are usually motion compensated and thus, the DC coefficients for their subblocks are, in general, not available. This would limit the extraction of the frame mean luminance to just I-frames. To overcome this problem a fast DC coefficients approximation method based on motion compensation is also proposed.

The extraction of the MLV can be divided in three steps:

a) Obtain an approximation of the DC coefficients for P and B-frame's macro-blocks based on available I-frame DC coefficients and motion vectors. This is called DC approximation by motion compensation (MC).

b) Calculate the frame mean luminance based only on the original DC coefficients of I-frames and in the approximated DC coefficients of P and B-frames.

c) Calculate the variance of the previously extracted frame mean luminance over a centered sliding window.

A method and a device are proposed for extracting the frame mean luminance variance (MLV) video feature in the compressed domain. Frame mean luminance is an important video characteristic which represents the overall amount of luminance contained in a frame. However, for many applications, the particular mean luminance of a frame is not as important as the variation of this luminance over a certain period of time. The proposed MLV represents the variation of a video characteristic (frame mean luminance) in a certain interval of time (a centred sliding window). The MLV feature is obtained directly from the information contained in the compressed digital video bitstream. For this purpose the DC coefficients of P and B-frames are approximated. The method has been applied to MPEG-2 compressed video, but it could be applied to any other digital video compression standard which makes use of frequency domain transformations (like the discrete cosine transform or the wavelet transform).

Although specific embodiments have been illustrated and described herein, it will be appreciated by those of ordinary skill in the art that a variety of alternate and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

**Claims**

1. A method for extracting a mean luminance value from an inter-coded frame, wherein the inter-coded frame is a part of a sequence of video frames comprising:

approximating DC coefficients for macro-blocks of the inter-coded frame based on DC coefficients of intra-coded macro-blocks surrounding reference blocks in a reference frame of the sequence, the reference blocks being pointed to by motion vectors of the macro-blocks of the inter-coded frame;
calculating the mean luminance value based on the approximated DC coefficients.

2. The method according to claim 1, further comprising:

calculating mean luminance values of a intra-coded frame based on DC coefficients of the intra-coded frame's macro-blocks;
calculating a variance of mean luminance values from the inter-coded frames and from the intra-coded frames of the sequence during an interval of time.

3. The method according to claim 2 wherein the variance is calculated over a temporally sliding window.

4. The method according to claim 3, further comprising:

determining an average of the mean luminance in the sliding window.

5. The method according to claim 3, further comprising:

determining the variance of the mean luminance in the sliding window.

6. The method according to claims 1 to 5, wherein approximating DC coefficients for the inter-coded frame's macro-block includes:

determining a block belonging to a reference frame of the inter-coded frame; the block having the largest overlap with a reference block of the inter-coded frame's macro-block; and
approximating the DC coefficient of the inter-coded frame's macro-block based on a DC coefficient of the block.

7. The method according to claim 1 to 6, further comprising:

cutting the border part of the frame before approximating the DC coefficients.

8. A device for extracting a mean luminance value from an inter-coded frame, wherein the inter-coded frame is a part of a sequence of video frames comprising:

an approximation unit configured to approximate DC coefficients for macro-blocks of the inter-coded frame based on DC coefficients of intra-coded macro-blocks surrounding reference blocks in a reference frame of the sequence, the reference blocks being pointed to by motion vectors of the macro-blocks of the inter-coded frame; and
a calculator configured to calculate the mean luminance value based on the approximated DC coefficients.

9. The device according to claim 8, wherein the calculator is further configured to calculate mean luminance values of a intra-coded frame based on DC coefficients of the intra-coded frame's macro-blocks; and configured to calculate a variance of mean luminance values from the inter-coded frames and from the intra-coded frames of the sequence during an interval of time.

10. The device according to claim 9, wherein the variance is calculated over a temporally sliding window.

11. The device according to claims 8 to 10, wherein the approximation unit includes:

a determination unit configured to determine a block belonging to a reference frame of the inter-coded frame; the block having the largest overlap with a reference block of the inter-coded frame's macro-block; wherein the approximation unit is configured to approximate the DC coefficient of the inter-coded frame's macro-block based on a DC coefficient of the block.

12. The device according to claim 8 to 11, further comprising:

a cutting unit configured to cut the border part of the frame before the DC coefficients are approximated.

13. A computer program product including computer program instructions that cause a computer to execute a method for extracting a mean luminance value from a inter-coded frame, wherein the inter-coded frame is a part of a sequence of video frames comprising:

approximating DC coefficients for macro-blocks of the inter-coded frame based on DC coefficients of intra-coded macro-blocks surrounding reference blocks in a reference frame of the sequence, the reference blocks being pointed to by motion vectors of the macro-blocks of the inter-coded frame;
calculating the mean luminance value based on the approximated DC coefficients.

14. Computer readable storage medium,
comprising a computer program product according to claim 13.

$S100$

Approximating DC coefficients for
inter-coded frame's macro-blocks
based on DC coefficients of intra-coded
macro-blocks of the sequence

$S102$

Calculating mean luminance value based
on approximated DC coefficients

FIG 1

200

Approximation Unit  202

Calculator  204

FIG 2

S100

Approximating DC coefficients for
inter-coded frame's macro-blocks
based on DC coefficients of intra-coded
macro-blocks of the sequence

S102

Calculating mean luminance value based
on approximated DC coefficients

S300

Calculating mean luminance value of intra-coded
frame based on DC coefficients
of intra-coded frame's macro-blocks

S302

Calculating variance of mean luminance values
from the inter-coded frames and from the
intra-coded frames of the sequence

FIG 3

402

400

Cutting Unit

Approximation Unit

202

Calculator 204

FIG 4

SB$_1$   SB$_2$   SB$_{Ref}$

MV

SB$_3$   SB$_4$   SB$_{Cur}$

FIG 5

FIG 6

FIG 7

FIG 8a

FIG 8b

FIG 9a

FIG 9b

**EUROPEAN SEARCH REPORT**

Application Number

EP 08 01 9760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SADLIER D A ET AL: "Automatic TV advertisement detection from MPEG bitstream" PATTERN RECOGNITION, vol. 35, no. 12, December 2002 (2002-12), pages 2719-2726, XP004379642 Elsevier, GB ISSN: 0031-3203 * abstract * * page 2719, right-hand column, line 9 - line 12 * * page 2720, left-hand column, line 5 - line 19 * * page 2720, right-hand column, line 33 - line 35 * * page 2721, left-hand column, line 3 - line 9 * * page 2722, left-hand column, line 16 - last line * * page 2725, right-hand column, line 11 - line 19 * * figure 1 * | 1-5, 7-10, 12-14 | INV. G06K9/00 H04N7/26 H04N7/50 H04N5/14 |
| Y | YEO B-L ET AL: "A Unified Approach to Temporal Segmentation of Motion JPEG and MPEG Compressed Video" PROCEEDINGS OF THE INTERNATIONAL CONFERENCE ON MULTIMEDIA COMPUTING AND SYSTEMS (ICMCS 1995), 15 May 1995 (1995-05-15), pages 81-88, XP010154584 IEEE, Los Alamitos, USA ISBN: 978-0-8186-7105-0 * abstract * * page 82, right-hand column, line 8 - page 83, right-hand column, line 10 * | 1-5, 7-10, 12-14 | TECHNICAL FIELDS SEARCHED (IPC) H04N G06K |

-/--

The present search report has been drawn up for all claims

| Place of search | Date of completion of the search | Examiner |
|---|---|---|
| Berlin | 16 June 2009 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt
European
Patent Office
Office européen
des brevets

# EUROPEAN SEARCH REPORT

**Application Number**

EP 08 01 9760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOKINEN ET AL: "Detection of dynamically inconsistent samples in measured signals" MEASUREMENT, vol. 41, no. 2, 8 January 2008 (2008-01-08), pages 144-150, XP022413236 Institute of Measurement and Control, London, GB ISSN: 0263-2241 * abstract * * page 144, left-hand column, line 12 - right-hand column, line 11 * * page 145, left-hand column, line 3 - line 19 * * page 148, right-hand column, line 14 - page 150, left-hand column, last line * * figures 3,4 * | 2,3,5,9, 10 | |
| A | US 6 671 420 B1 (FEATHER GARY [US] ET AL) 30 December 2003 (2003-12-30) * abstract * * column 4, line 57 - line 66 * * column 5, line 43 - line 63 * * column 7, line 47 - line 58 * * figure 4 * | 2,3,5,9, 10 | |
| A | US 6 370 192 B1 (PEARLSTEIN LARRY [US] ET AL) 9 April 2002 (2002-04-09) * column 7, line 10 - line 49 * * column 11, line 12 - column 16, line 59 * * figures 3,4,11-13 * | 7,12 | |

TECHNICAL FIELDS
SEARCHED      (IPC)

-/--

The present search report has been drawn up for all claims

| Place of search | Date of completion of the search | Examiner |
|---|---|---|
| Berlin | 16 June 2009 | Sampels, Michael |

EPO FORM 1503 03.82 (P04C01)

## EUROPEAN SEARCH REPORT

**Application Number**

EP 08 01 9760

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CÓZAR J R ET AL: "Logotype detection to support semantic-based video annotation" SIGNAL PROCESSING: IMAGE COMMUNICATION, vol. 22, no. 7-8, 1 August 2007 (2007-08-01), pages 669-679, XP022207435 Elsevier, Amsterdam, NL ISSN: 0923-5965 * abstract * * page 671, left-hand column, line 17 - right-hand column, line 24 * * figure 2 * | 2,3,5,9, 10 | |

**TECHNICAL FIELDS SEARCHED (IPC)**

The present search report has been drawn up for all claims

| Place of search | Date of completion of the search | Examiner |
|---|---|---|
| Berlin | 16 June 2009 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

EP 2 187 337 A1

## ANNEX TO THE EUROPEAN SEARCH REPORT
## ON EUROPEAN PATENT APPLICATION NO.

EP 08 01 9760

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2009

| Patent document cited in search report | | Publication date | Patent family member(s) | | Publication date |
|---|---|---|---|---|---|
| US 6671420 | B1 | 30-12-2003 | NONE | | |
| US 6370192 | B1 | 09-04-2002 | JP | 2000041242 A | 08-02-2000 |
| | | | US | 2002110197 A1 | 15-08-2002 |

EPO FORM P0459

For more details about this annex : see Official Journal of the European Patent Office, No. 12/82

23